(19) **Europäisches Patentamt**

**European Patent Office**

**Office européen des brevets**

(11) **EP 1 133 923 A1**

(12) **EUROPEAN PATENT APPLICATION**

(43) Date of publication:
**19.09.2001 Bulletin 2001/38**

(51) Int Cl.⁷: **A23F 5/28**, A23C 1/10, A23L 3/52, A23F 3/22

(21) Application number: **00105523.5**

(22) Date of filing: **15.03.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **SOCIETE DES PRODUITS NESTLE S.A.**
**1800 Vevey (CH)**

(72) Inventors:
• **Macinnes, William Michael**
  **1005 Lausanne (CH)**
• **Witschi, Friedrich**
  **8311 Brütten (CH)**

(54) **Foamed, dried beverage powder**

(57) The invention concerns a process for preparing a dried soluble beverage product from beverage liquor. The process comprises preparing a concentrated beverage liquor to provide a concentrated liquor of a solids concentration above about 50% by weight; foaming the concentrated liquor to an overrun of at least about 200% for providing a foamed liquor; stabilising the foamed liquor for providing a stabilised foam; and drying the stabilised foam for providing a soluble beverage product. The invention also relates to a dried beverage product, which comprises particles of a dried beverage base. The particles have a clearly identifiable foam structure that is substantially free from structures produced by ice crystals during in the drying of the product.

## Description

Field of the Invention

This invention relates to a process for preparing a dried soluble beverage product and to the dried beverage product them selves. The process is particularly suitable for producing beverage powders, which contain high levels of carbohydrates, and/or polysaccharides and which have high levels of overrun.

Background to the Invention

Many soluble beverage powders are commercially available. Examples of these powders include soluble coffee powder, soluble tea powder, milk powders, cereal-based beverage powders, and chocolate-based powders. These beverage powders are usually produced by spray-drying or freeze-drying concentrated base liquor. Normally, the base liquor has a solids concentration of about 20% to about 40% by weight.

The concentrated liquor is usually spray-dried by spraying the concentrated liquor into a drying tower along with a drying gas; usually hot air. The air temperature and air flow rates are adjusted to give a desired level of moisture in the beverage powder produced. Usually this moisture level is selected to be less than about 10% by weight.

The concentrated liquor is usually freeze dried by first chilling the concentrated liquor to a slush and gassing it. The gassed liquor is then frozen. The frozen liquor is then comminuted to particles. The particles are then transferred to a vacuum dryer where frozen water in the particles is caused to sublime. Again the final moisture level is usually selected to be less than about 10% by weight.

However, both spray-drying and freeze-drying are expensive unit operations; especially freeze-drying. Therefore there have been attempts to avoid spray- or freeze-drying. Usually, these attempts have centred on concentrating the base liquor to very high solids concentrations; for example over about 80% by weight. The concentrated base liquor is then heated and pressurised before being allowed to expand. A certain amount of moisture is lost during the expansion. After expansion, the concentrate is chilled, comminuted and, if necessary, subjected to further drying.

An example of such a process is described in US patent 5,079,026 in relation to the production of soluble coffee beverages. Unfortunately, these processes result in the formation of carbohydrate glasses and these glasses cause the resulting powder to be much less soluble than spray- or freeze-dried powders. This is acknowledged in US patent 5,079,026 where it is stated that oil should be injected into the concentrated base liquor to improve the solubility.

Therefore there is still a need for a process of drying beverage liquors to powder without the need for spray- and freeze-drying unit operations.

Summary of the Invention

Accordingly, in one aspect, the invention provides a process for preparing a dried soluble beverage product from a beverage liquor the process comprising:

> preparing a concentrated beverage liquor to provide a concentrated liquor of a solids concentration above about 50% by weight;
> foaming the concentrated liquor to an overrun of at least about 200% for providing a foamed liquor;
> stabilising the foamed liquor for providing a stabilised foam; and
> drying the stabilised foam for providing a soluble beverage product.

It is surprisingly found that the process is able to produce a beverage product that has good solubility and at a reduced operating cost. The process allows a rapid drying of the beverage product.

Preparation of the beverage liquor may preferably be done by concentrating a liquor to provide a concentrated liquor of a solids concentration above 50%, preferably in the range from about 60% to about 85%, and more preferably in the range of from about 70% to about 85% solids by weight. Alternatively, the preparation of the concentrated beverage liquor may preferably be done by reconstituting previously dried beverage powders or mixes of powders and liquids, by adding a liquid such as water to the above-mentioned desired solids concentrations.

The concentrated liquor is foamed to an overrun of at least 200%, preferably foamed to an overrun in the range of from about 250% to about 500%, more preferably above about 300% and most preferably in the range from about 350% to about 500% overrun. The actual overrun used will depend on the desired final bulk density of the dry powder. Foams with these levels of overrun will have bubble sizes of about 5 $\mu$m to about 200 $\mu$m in diameter.

The foamed liquor is preferably stabilised by rapidly chilling it; for example to a temperature below about 0°C within several minutes and maintained at the stabilising temperature until drying begins. The preferable cooling time can range from 1 minute to 30 minutes depending on the final necessary temperature for foam stabilisation and on the foam overrun, i.e., its thermal conductivity. The preferable range of final stabilised foam temperatures can range from about - 40°C to about 40°C depending on the solids content of the foam liquor and its viscosity at those temperatures. It is desirable that the final stabilising temperature is such that the liquor viscosity is > $10^5$Pa.sec and preferably between about $10^6$ and about $10^8$Pa.sec. This is important to get a sufficiently stabilised foam, which does not collapse prior to drying. Therefore, for a specific liquor and solids content an appropriate temperature for stabilising the foam can be determined knowing the position of the constant viscosity or "iso-viscosity" line which specifies the temperatures as a function of solids content where the viscosity is equal to $10^5$Pa.sec, for example. The iso-viscosity lines can be defined in the product's state diagram and are usually "parallel" to the product's glass transition line.

In a another aspect, this invention provides a soluble beverage powder or dry shaped particles produced by forming or moulding during the stabilisation phase of the process defined above.

In further aspect, this invention provides a soluble foamed beverage product or powder, or dry shaped particles comprising particles of a dried beverage base, the particles having a clearly identifiable foam structure which is substantially free from structures produced by ice crystals during in the drying of the product..

It has been found that the soluble beverage powder, due to controlled porosity, has an improved solubility. In common with the particles of beverage powders produced by freeze-drying process the particles of this invention are substantially homogeneous in relation to their density.

The soluble beverage product may be a polysaccharide powder, for example, a soluble coffee powder, a soluble tea powder, or a powder with a large percentage of low molecular weight sugars, carbohydrates and other ingredients such as a soluble milk powder, a cereal-based beverage powder, or a chocolate beverage powder.

Detailed Description of Preferred Embodiments of the Invention

Embodiments of the invention are now described, by way of example only. In this specification, the term "overrun" means the ratio of the weight of a given volume of liquor minus the weight of the same volume of foam, divided by the weight of foam of the same volume, expressed as %.

$$Overrun = \frac{(W_{liquor} - W_{foam})}{W_{foam}} 100$$

In the present context "stabilising a foam" means that the foam is made rigid enough so that it will not collapse under its own weight at least for a period of time up to and including the drying time. Advantageously, the foam should be substantially stable until it is dried. For practical purposes this is from about one minute, if drying starts immediately after the foam production and stabilisation step, up to several hours if the drying operation must be delayed for example in batch drying. It is preferred that the foam is stable at least about one minutes.

The invention provides beverage powder that is made up of particles or dried shapes having a unique internal texture and which are soluble. The beverage product is produced by a process, which comprises foaming highly concentrated beverage liquors to high overruns. The foamed liquors are then dried but need much less drying than less concentrated liquors. Therefore the operational costs associated with drying may be reduced, and less expensive techniques than vacuum drying or freeze-drying can be used.

The invention may be used in relation to any beverage powder, which contains carbohydrates or polysaccharides. Examples of suitable beverage powders are given above. However, for simplicity, the invention will be described primarily in relation to the production of soluble coffee powder. It is to be appreciated that the invention is in no way limited to the production of soluble coffee powder.

One of the initial steps in the process is the preparation of a concentrated beverage liquor. The beverage liquor may be obtained from any suitable source. For example, it may be obtained by mixing previously dried powders with water to obtain a concentrated liquor, or a liquor which can then be further concentrated, if needed or desired.

For example, in the case of coffee, a coffee extract may be prepared in the usual fashion. For example, a coffee extract is prepared by subjecting roast and ground coffee to extraction using an extraction liquid. The extraction liquid may be hot water or a hot, dilute coffee extract.

The extraction may be carried out in a counter-current manner in one or more extraction vessels. Any suitable extraction vessels may be used; for example fixed bed reactors or continuous counter-current extractors. The choice and design of the vessels is a matter of preference and has no critical impact on the process. Further, if fixed bed reactors are used, the extraction liquid may be caused to flow upward through the reactor or downward through the reactor, as desired. However, the extraction is conveniently carried out in a battery of fixed bed reactors connected such that extraction liquid may flow through them in series.

The extraction may be carried out under any desired conditions, which provide a desired yield and flavour profile. The extraction conditions are not critical to the process. Suitable extraction processes and conditions are described in European patent applications 0538512 and 0826308; the disclosures of which are incorporated by reference.

The extract obtained is then concentrated by suitable means. For example, the extract may be concentrated in film evaporators. Thin film evaporators are particularly suitable; such as the evaporators commercialised by Luwa AG of Zürich, Switzerland. Otherwise plate evaporators or other suitable equipment may be used. The extract is concentrated to a solids concentration of about 50% to about 85% by weight; preferably above 60% and more preferably in the range 70 to 85% solids by weight. Extracts of this concentration are extremely viscous at room temperature.

The concentrated extract is then subjected to foaming. In order for the final product to be sufficiently soluble and easily and economically dried, the concentrated extract should be foamed to an overrun of at least 200%. For example, the concentrated extract may be preferably foamed to an overrun above 250% and more preferably in the range 350 to 500% overrun, the actual overrun used will depend on the desired final bulk density of the dry powder. The foaming is best carried out by mechanical means. In order to obtain the above mentioned level of foaming in a concentrated extract containing at least 50% by weight of solids, the foaming is best carried out above room temperature and at high pressure in a rotor/stator foam processor. The preferable range of temperatures depends on the solids content of the liquor and its viscosity, and will be in the range 20°C to 120°C. The preferable range of pressures, for foaming will depend on the final overrun and bubble size that is desired, and will be in the range of 1 to 60 bars (0.1 MPa to 6 MPa) pressure. A preferred temperature range is from about 40°C to about 80°C and a preferred pressure range is from about 0.5 to 4Mpa.

Foam processors of this nature are commercially available. Suitable foam processors may be obtained from Kinematica AG of Lucerne, Switzerland under the trade name MEGATRON. The foam processor internal geometry comprises a tubular stator, which has a set of teeth in its bore. The rotor, which rotates in the bore of the stator, has a complementary set of teeth. The gap between the teeth of the rotor and those of the stator can be set in the range of 0.1 mm to 5 mm. Another feature of this foam processor is the small internal volume and good cooling of the foam due to a surrounding cooling jacket, which minimises the specific mechanical energy required for foaming, and limits the temperature rise in the foam during the foaming.

A foaming gas is injected into the concentrated extract, which then passes into the high shear field generated between the teeth of the rotor and stator. The concentrated extract is then highly foamed with the foam being formed of bubbles of size less than about 200 $\mu$m, at atmospheric pressure; the bubble size in the foam processor will be smaller by the ratio of the pressure in the foam processor to atmospheric pressure. For example, if the bubble size after expansion is 100$\mu$m, and the foaming pressure is 25 bars, the foam bubble size generated in the foam processor will be 4$\mu$m.

The foaming gas that is used to foam the concentrated extract may be any suitable gas; for example air, nitrogen and carbon dioxide. For beverage powders, which are damaged by oxygen, inert gases such as nitrogen and carbon dioxide are preferred. The foam bubble size also depends on the gas used. Nitrogen gas results in much smaller bubble size than carbon dioxide gas, and mixtures of these gases can be used to control bubble size. Similarly, the thermal conductivity in the foam depends on the gas used; it may be improved by using a low molecular weight gas such as helium.

The foam processor is preferably operated at pressures above atmospheric pressure, 0.1Mpa, and preferably above 0.2Mpa. More preferably the pressure is in the range of 0.5 to 4Mpa.

It has been found that the foam may be treated in a manner usual for soluble powder production. Thus, if desired, it is possible to form the foamed extract into thin sheets, strips or rods prior to and/or during the cooling/stabilising operations on the foam. This will facilitate later comminuting operations, if these are necessary. This is conveniently done by forcing the foamed extract through a suitable orifice; for example an extrusion die. The thin sheets, strips or rods preferably have dimensions close to the desired final soluble powder particle dimensions that is, in a range of 0.1 to 4 mm and preferably in a range of 1 to 3 mm.

Before drying, foamed extract is then stabilised to a sufficiently rigid state, so that it can be further processed and in particular, dried successfully with out losing the unique internal foam texture/structure and the desired porosity/overrun that were generated during the foaming operation. This is conveniently done by rapidly cooling the foamed extract. For example, within about 1 to 30 minutes . This may be done, for example, by transporting the foam onto a freezing drum or belt cooled used a suitable cooling medium. Freezing systems conventionally used in freeze-drying operations may be used. Conventional cooling means are cold air, or liquid refrigerants such as ammonia, liquid carbon dioxide, or other refrigerants preferably with low ozone producing levels.

Alternatively, the foamed extract may be quenched in a suitable liquid cooling medium. If the beverage product is cooled by direct contact with a liquid, then the cooling medium will preferably be liquid nitrogen, liquid carbon dioxide, or cold ethanol, and the like. In this case the cooling may be sufficiently rapid such that the foam temperature is reduced to its final stabilised foam temperature within 0.1 to 1 minutes . The preferable range of final stabilised foam temperatures can range from about -40°C to 40°C depending on the solids content of the foam liquor and its viscosity at those temperatures. The final stabilising temperature must be such that the liquor viscosity is > $10^5$Pa.sec and preferably > $10^6$ to $10^8$Pa.sec. For the production of soluble coffee a more preferred range of final stabilisation foam temperature is from about -40°C to 0°C, for concentrated extract or foam solids content equal to 70% up to 80%., as defined by the iso-viscosity = $10^5$Pa.sec line in the coffee liquor state diagram..

Suitable stabilisers may also be added to the liquor or foam to stabilise or assist in stabilising it; such as food-grade surfactants or proteins that have this functionality. The stabilisers are conveniently added to the concentrated extract immediately prior to foaming.

The foam may also be stabilised by incorporation of specific "gell forming" polysaccharides. Examples of suitable"gell forming" polysaccharides are gelatine, agar agar, guar gum, pectins etc. which will, upon gellation in the foam, enhance its rigidity. The gelling agents may also be added to assist the stabilisation process described above.

The foams may also be stabilised by incorporation of specific "crystallising" carbohydrates. Suitable "crystallising" carbohydrates are lactose, mannitol etc. which will, upon crystallisation in the foam, enhance its rigidity. The crystallising agent may also be added to assist the stabilisation process described above.

Contrary to other processes involving high solids content liquors, there is substantially no "flashing", i.e. instantaneous boiling or vaporisation of water. The water loss occurring at the discharge of the pressure reducing device at the exit from the foam processor. This is because temperature of the foam is rather low i.e. below the boiling point of water due to the low entry temperature, low specific mechanical energy for foaming, and good cooling in the Kinematica foam processor. Never-the-less, due to the high solids content of the extract and foam produced in the process described above, the amount of moisture that must be removed in subsequent drying steps is much reduced as compared to spray-and freeze-drying.

The stabilised foam may then be subjected to comminuting. This may be accomplished by breaking the foam into pieces of a relative large size and then grinding the pieces. The unit operations conventionally used to break up frozen concentrate in freeze-drying operations may also be used to comminute the stabilised foam. The stabilised foam is preferably comminuted to a particle size of about 0.5 mm to about 3 mm and more preferably from 1 to 2.5mm.

Alternatively, the stabilised foamed liquor may be subjected a forming step wherein it is formed into particles or specific shapes prior to or during the stabilisation. For example, by forcing or extruding the foamed liquor through a nozzle or extrusion die, using the pressure in the foam processor. The foamed liquor may also be formed by moulding prior to, or during, the stabilisation process, into a specific shape or shapes that are retained in the final dried product. Common injection moulding techniques may be used.

The particles or shapes are then dried. Due to the high initial solids content of the concentrated liquor the amount of water that must be removed during the drying step has been very significantly reduced. This may result in a significant reduction in drying unit operation costs, as well as making possible the use of less expensive techniques than vacuum drying or freeze-drying. Drying may be done in any suitable manner in any suitable drier. However it is desirable that in drying to soluble product, the particles or shapes should substantially retain their unique internal foam texture/structure and its porosity/overrun that were generated during the foaming operation. The bubble size and overrun as well as the controlled porosity generated during the foaming and stabilising processes described above aid substantially in the efficiency of the drying operations. The porosity can be controlled by the overrun and cooling rate of the foam; quench cooling leads to more open or interconnected bubble porosity than does slower cooling. For example, the particles may be dried in a vacuum drier. Suitable vacuum dryers are commercially available. Further, the vacuum dryers, which are conventionally used in freeze-drying operations, may be used.

Alternatively, the particles may be dried in a fluidised bed drier. For dryers, which do not operate under reduced pressure, it may be advantageous to begin drying at a temperature below the glass transition temperature of the particles. The drying temperature may then be raised as the glass transition temperature of the particles increases with drying. This may substantially eliminate the collapsing of the foamed particles during drying.

Alternatively, the particles may be dried in a hot air tunnel drier, on a wire mesh belt. Here again, the drying temperature must be controlled to avoid the collapse of the foamed particles during drying.

The particles obtained from the drier may then be allowed to cool and are then processed and packed in the usual manner.

In the production of soluble coffee powders, it is also found that the foaming gas and the extent of foaming has an influence on the appearance of the powder. For example, if the foaming gas is carbon dioxide and an overrun of 300% to 400% is used, a darker powder is obtained. However, if the foaming gas is nitrogen and an overrun of 400% to 500% is used, a lighter powder is obtained. This enables powders of a desired appearance to be produced. In general, the powders of this invention can have, to the naked eye, an appearance substantially identical to powders produced by freeze-drying. Powders of a desired density of about 220 kg/$m^3$ to about 250 kg/$m^3$ may be obtained.

The soluble beverage product of the invention will now be further illustrated by way of examples only with reference to the drawings in which

Figure 1 is a photographs of beverage product according to the invention gassed with CO2,
Figure 2 is a photographs of beverage product according to the invention gassed with N2,

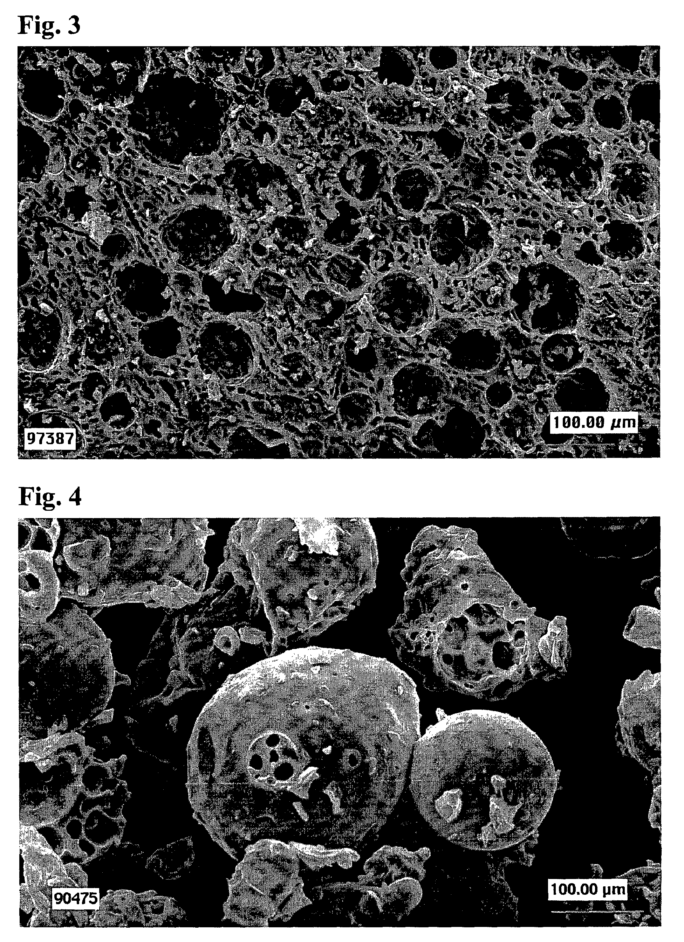

Figure 3 is a photographs of a freezer dried beverage product, and
Figure 4 is a photographs of a non-agglomerated spray dried beverage product.

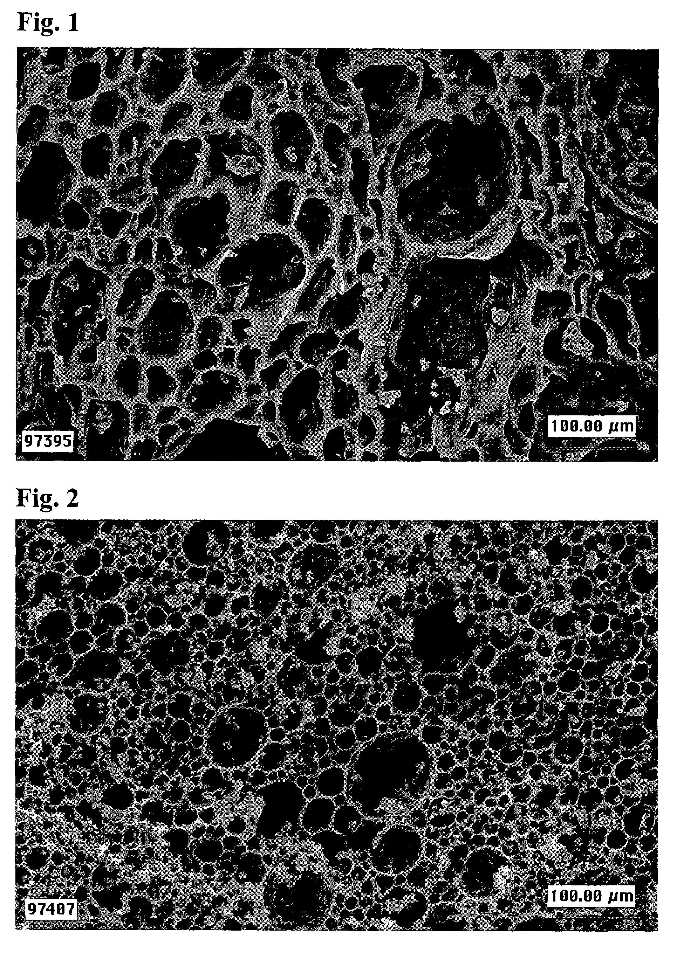

Figure 1 shows a soluble beverage product according to the invention which has an overrun of 540% and which has been gassed with CO2. In Figure 2 the soluble beverage product according to the invention has an overrun of 470%.

It can be seen from the Figures 1 and 2 that the soluble beverage product of the invention comprises particles of a dried beverage base, each particle having a substantially foamed structure with a minimum of structure of ice crystals which are usually produced during the freezing-drying process, at the microscopic scale (magnification of > 20x).

Further it can be seen that the soluble beverage powder of the invention comprises particles of a dried beverage base, each particle having a clearly identifiable foam structure which is substantially homogeneous in relation to their density.

It has been found that the beverage product according to the invention has a unique easily identifiable structure. Examples of this foam structure and texture are shown in the Scanning Electron Microscope photographs for comparison to those structure generated by spray-drying and freeze-drying. It is clearly seen that the internal particle structure and texture of the beverage product according to the invention is significantly different from and distinguishable from than that produced by spray-drying or freeze-drying. For the beverage product according to the invention the particles internal structure and texture with its controlled porosity and overrun forms the basis for the rapid drying with reduced costs, and for the good solubility of the dry powder

**Claims**

1. A process for preparing a dried soluble beverage product from a beverage liquor the process comprising:

   preparing a concentrated beverage liquor to provide a concentrated liquor of a solids concentration above about 50% by weight; foaming the concentrated liquor to an overrun of at least about 200% for providing a foamed liquor; stabilising the foamed liquor for providing a stabilised foam; and drying the stabilised foam for providing a soluble beverage product.

2. A process according to claim 1, in which the stabilised foam is comminuted to particles and the particles are dried to a soluble beverage powder.

3. A process according to claim 1, in which the foamed liquor is formed into particles or specific shapes prior to or during the stabilisation.

4. A process according to any of the claims 1 and 3, in which the foamed liquor is formed by moulding prior to, or during the stabilisation process, into a specific shape or shapes that are retained in the final dried product.

5. A process according to any of claims 1and 4, in which the beverage liquor is prepared by concentrating a solids liquor to provide a concentrated liquor of a solids concentration of about 60% to about 85% by weight.

6. A process according to any of claims 1 and 4, in which the beverage liquor is prepared by mixing ingredients in powder or liquid state with water to provide a concentrated liquor of a solids concentration of about 60% to about 85% by weight.

7. A process according to any of claim 1 to 6, in which the concentrated liquor is foamed to an overrun of about 250% to about 500%.

8. A process according to any of claims 1 to 7, in which the foamed liquor is stabilised by rapidly chilling it.

9. A process according to any of claims 1 to 8 in which the foamed liquor is stabilised by incorporation a foam stabilising ingredient.

10. A process according to claim 9 in which the foamed liquor is stabilised by incorporation a gelling agent.

11. A process according to claims 10 and 11 in which the foamed liquor is stabilised by incorporation of a crystallising agent.

12. A soluble foamed beverage product comprising particles of a dried beverage base, the particles having a clearly identifiable foam structure that is substantially free from structures produced by ice crystals during in the drying of the product..

13. A soluble foamed beverage product according to claim 12 comprising particles of a dried beverage base, each particle having a clearly identifiable foam structure which is substantially homogeneous in relation to their density.

14. A soluble foamed beverage product according to claim 12 and 13 comprising particles or shapes of a dried beverage base, where the beverage base is selected from the group consisting of coffee, tea, milk, cereals, chocolate, carbohydrates, or polysaccharides or a combination thereof.

**Fig. 1**

**Fig. 2**

EP 1 133 923 A1

**Fig. 3**

**Fig. 4**

8

## EUROPEAN SEARCH REPORT

**European Patent Office**

**Application Number**

EP 00 10 5523

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | R. GRAHAM: "Foam-mat-drying citrud juices " <br> FOOD TECHNOLOGY., <br> 1965, pages 1273-1275, XP002147415 <br> CHICAGO US <br> * the whole document * | 1,3, 7-10, 12-14 | A23F5/28 <br> A23C1/10 <br> A23L3/52 <br> A23F3/22 |
| X | US 3 170 803 A (A. MORGAN) <br> 23 February 1965 (1965-02-23) <br><br> * column 4, line 45 - column 7, line 73; example V * | 1,3,4, 7-10, 12-14 | |
| X | US 3 266 559 A (R. OSBORNE) <br> 16 August 1966 (1966-08-16) <br> * column 2, line 21 - column 7, line 64; claims 1-6 * | 1,5,7,9, 10,12-14 | |
| A | US 4 324 808 A (WERTHEIM JOHN H ET AL) <br> 13 April 1982 (1982-04-13) <br> * claims 1,2; example 1 * | 1,2 | **TECHNICAL FIELDS SEARCHED** (Int.Cl.7) <br><br> A23F <br> A23C <br> A23L |

The present search report has been drawn up for all claims

| Place of search | Date of completion of the search | Examiner |
|---|---|---|
| THE HAGUE | 14 September 2000 | Desmedt, G |

**ANNEX TO THE EUROPEAN SEARCH REPORT
ON EUROPEAN PATENT APPLICATION NO.**

EP 00 10 5523

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2000

| Patent document cited in search report | | Publication date | Patent family member(s) | | Publication date |
|---|---|---|---|---|---|
| US 3170803 | A | 23-02-1965 | NONE | | |
| US 3266559 | A | 16-08-1966 | NONE | | |
| US 4324808 | A | 13-04-1982 | BE | 678350 A | 01-09-1966 |
| | | | BE | 678351 A | 01-09-1966 |
| | | | DE | 1692269 A | 05-01-1972 |
| | | | DK | 119040 B | 02-11-1970 |
| | | | GB | 1102587 A | |
| | | | GB | 1102588 A | |
| | | | JP | 51026501 B | 06-08-1976 |
| | | | NL | 6604286 A | 03-10-1966 |
| | | | SE | 336522 B | 05-07-1971 |
| | | | US | 4565706 A | 21-01-1986 |

EPO FORM P0459

For more details about this annex : see Official Journal of the European Patent Office, No. 12/82